# EUROPÄISCHE PATENTANMELDUNG

(11) **EP 3 603 945 A1**
(43) Veröffentlichungstag der Anmeldung: **05.02.2020**
(21) Anmeldenummer: 18186624.5
(22) Anmeldetag: 31.07.2018
(51) Int. Cl.: B29D 23/00

(54) **VERFAHREN UND VORRICHTUNG ZUM HERSTELLEN EINES ENDLOSHALBZEUGS, ENDLOSHALBZEUG, ERDWÄRMESONDE, BOHRLOCHARMIERUNG SOWIE SANIERUNGSROHR**

(71) Anmelder: TTS Inova AG, 8240 Thayngen (CH)
(72) Erfinder: BERNATH, Simon, 8240 Thayngen (CH)
(74) Vertreter: Dr. Graf & Partner AG

(57) **Zusammenfassung**

Verfahren zur Herstellung eines Endloshalbzeugs (10), welches umfasst:
Zuführen eines Silikonschlauchs (12) sowie einen separaten Innenleiter (11), wobei der Innenleiter (11) in einem vom Silikonschlauch (12) gebildeten ersten Innenraum (12a) verläuft;
Umhüllen des zugeführten Silikonschlaucht (12) durch Herstellen eines den Silikonschlauch (12) von Aussen umschliessenden Endlos-Faserschlauchs (13);
Aufspreizen des Silikonschlauchs (12) sodass zwischen dem Silikonschlauch (12) und dem Endlos-Faserschlauch (13) ein Spalt (14) ausgebildet wird;
Zuführen eines Matrixmaterials in den Spalt (14); und Verbinden des Silikonschlauchs 12) und des Endlos-Faserschlauchs (13) durch Aushärten des Matrixmaterials.

## Beschreibung

Die Erfindung betrifft ein Verfahren sowie eine Vorrichtung zum Herstellen eines Endloshalbzeugs, ein Endloshalbzeug, eine Erdwärmesonde, eine Bohrlocharmierung sowie ein Sanierungsrohr.

### Stand der Technik

Die zunehmende Verdichtung im Siedlungsbau hat zur Folge, dass Bauten häufig auch in Gebieten mit Grundwasservorkommen erstellt werden. Zur energieeffizienten Erwärmung und Kühlung von Gebäuden, und insbesondere auch zur Reduktion der CO₂ Emission, gewinnt eine Wärme- und/oder Kälteerzeugung Mittels Wärmepumpen unter Verwendung von Erdwärmesonden zunehmend an Bedeutung. Solche Erdwärmesonden erfordern eine Bohrung in den Untergrund mit einer Tiefe von üblicherweise 50m bis 400m. Zum Schutz des Grundwassers bestehen jedoch äusserst strenge Vorschriften, was zur Folge hat, dass die Erstellung von Erdwärmesonden in Gebieten mit Grundwasservorkommen üblicherweise nicht erlaubt ist. Es besteht somit ein Bedarf nach einem kostengünstigen System, das die Gefahr einer Verunreinigung des Grundwassers oder andersartige Verunreinigungen durch unter die Erdoberfläche reichende Bauten, insbesondere Erdwärmesonden, ausschliesst.

Das Dokument WO2013/170389A2 offenbart eine Erdwärmesonde mit einer expandierbaren schlauchartigen Umhüllung. Diese Umhüllung weist eine begrenzte Durchlässigkeit gegenüber Wasser auf, sodass eine innerhalb der Erdwärmesonde zirkulierende Flüssigkeit das Grundwasser verunreinigen würde. Das Dokument WO2017/016790A1 offenbart ebenfalls einer Erdwärmesonde. Auch diese Erdwärmesonde kann eine garantierte Wasser- bzw. Flüssigkeitsundurchlässigkeit nicht sicherstellen. Es besteht somit weiterhin der Bedarf nach einem sicheren und kostengünstigen System, das für Erdwärmesonden und sonstige Tiefbauten, und insbesondere für Tiefbauten in einem Gebiet mit Grundwasservorkommen geeignet ist.

### Darstellung der Erfindung

Es ist Aufgabe der vorliegenden Erfindung, ein Verfahren und eine Vorrichtung zum Herstellen eines Endlos-Halbzeugs, ein Endloshalbzeug, eine Erdwärmesonde, Bohrlocharmierung sowie ein Sanierungsrohr zu schaffen, bei welchen die Nachteile aus dem Stand der Technik gelöst sind.

Diese Aufgabe wird durch ein Verfahren aufweisend die Merkmale gemäss Anspruch 1 gelöst. Die abhängigen Ansprüche 2 bis 7 betreffen weitere, vorteilhafte Verfahrensschritte. Die Aufgabe wird weiter durch eine Vorrichtung aufweisend die Merkmale gemäss Anspruch 8 gelöst. Die abhängigen Ansprüche 9 bis 10 betreffen weitere, vorteilhafte Ausgestaltungen. Die Aufgabe wird weiter gelöst mit einem Endloshalbzeug hergestellt nach dem erfindungsgemässen Verfahren. Die Aufgabe wird weiter gelöst mit einer Erdwärmesonde, einer Bohrlochalarmierung oder einem Sanierungsrohr umfassend das Endloshalbzeug.

Die Aufgabe wird insbesondere gelöst mit einem Verfahren zur Herstellung eines Endloshalbzeugs, welches umfasst:
Zuführen eines Silikonschlauchs sowie einen separaten Innenleiter, wobei der Innenleiter in einem vom Silikonschlauch gebildeten ersten Innenraum verläuft;
Umhüllen des zugeführten Silikonschlaucht durch Herstellen eines den Silikonschlauch von Aussen umschliessenden Endlos-Faserschlauchs;
Aufspreizen des Silikonschlauchs sodass zwischen dem Silikonschlauch und dem Endlos-Faserschlauch ein Spalt ausgebildet wird;
Zuführen eines Matrixmaterials in den Spalt; und Verbinden des Silikonschlauchs und des Endlos-Faserschlauchs durch Aushärten des Matrixmaterials.

Die Aufgabe wird zudem insbesondere gelöst mit einer Vorrichtung zum Herstellen eines Endloshalbzeugs, umfassend:
eine Fördervorrichtung zum Zuführen eines Silikonschlauchs sowie einem innerhalb des Silikonschlauchs angeordneten Innenleiters;
eine Verbindungsvorrichtung zum Verbinden von einer Mehrzahl von Fasern zu einem Endlos-Faserschlauch, und zum Umhüllen des zugeführten Silikonschlauch mit dem Endlos-Faserschlauch;
eine Spreizvorrichtung zum Aufweiten des Silikonschlauchs und zur Reduktion eines Spaltes zwischen Endlos-Faserschlauch und Silikonschlauch;
eine Zuführvorrichtung zum Zuführen eines flüssigen Verbindungsmittels in den Spalt; und
eine Vernetzungseinrichtung zum Vernetzen des Verbindungsmittels und zum Verbinden des Silikonschlauchs mit dem Endlos-Faserschlauch.

Das erfindungsgemässe Endloshalbzeug weist den Vorteil auf, dass der Silikonschlauch und vorzugsweise natürlich auch der den Silikonschlauch umhüllende Endlos-Faserschlauch sowie das den Silikonschlauch und den Endlos-Faserschlauch verbindende Matrixmaterial nur aus Materialien besteht, die gewässerschutztechnisch unbedenklich sind. Vorzugsweise sind diese Materialien lebensmittelecht bzw. lebensmittelkonform. Weil der Silikonschlauch in einem ersten Verfahrensschritt hergestellt wird, separat vom Endlos-Faserschlauch, kann bereits während der Herstellung des Silikonschlauchs überprüft bzw. sichergestellt werden, dass dieser Fluid dicht ist. Der danach erfolgende Verfahrensschritt des Umhüllens des Silikonschlauchs mit dem Endlos-Faserschlauch beeinflusst die Fluid Dichtheit, insbesondere die Flüssigkeitsdichtheit, des Silikonschlauchs nicht mehr. Somit ist beim erfindungsgemässen Endloshalbzeug sichergestellt, dass der vom Silikonschlauch ausgebildete Innenraum absolut wasserdicht bzw. Fluid dicht von dessen Aussenraum getrennt ist. Somit kann ein aus dem Endloshalbzeug hergestelltes Endprodukt wie zum Beispiel eine Erdwärmesonde, eine Bohrlochalarmierung oder ein Sanierungsrohr auch problemlos in Tiefbauten verwendet werden, insbesondere für Bauteile, die mit Grundwasser in direkten Kontakt kommen. So kann beispielsweise die Wasserdichtheit der Erdwärmesonde garantiert werden, weshalb es möglich ist, die erfindungsgemässe Erdwärmesonde auch in Gebieten mit Grundwasservorkommen langfristig sicher einzusetzen. Falls erforderlich können für die erfindungsgemässen Endprodukte auch behördliche Zulassungen erlangt werden, welche deren Einsatz in Gebieten mit Grundwasservorkommen erlauben.
Die aus dem erfindungsgemässen Endloshalbzeug hergestellten Endprodukte können natürlich auch in Gebieten ohne Grundwasservorkommen verwendet werden, was den Vorteil ergibt, dass solche Produkte im Wesentlichen überall im Bau eingesetzt werden können, unabhängig vom Wasservorkommen, sodass auf unterschiedliche Produkte verzichtet werden kann, was eine kostengünstigere Produktion und einen wesentlich günstigeren Vertrieb erlaubt.

Das erfindungsgemässe Endloshalbzeug wird im Wesentlichen durch zwei Teilverfahren hergestellt, einem ersten Teilverfahren, mit welchem ein Silikonschlauch sowie ein darin angeordneter Innenleiter hergestellt wird, und einem zweiten Teilverfahren, bei welchem um den Silikonschlauch einen diesen in Umfangsrichtung umschliessenden Endlos-Faserschlauch angebracht wird und der Silikonschlauch an dessen Aussenseite mit dem Endlos-Faserschlauch verbunden wird. Der Silikonschlauch wird mittels eines Extrusionsverfahrens hergestellt, wobei dieses Herstellungsverfahren sicherstellt, dass der hergestellte Silikonschlauch Fluid dicht ist.

Unter einem Silikonschlauch wird ein Schlauch bestehend aus Silikon verstanden, wobei Silikone chemisch genauer bezeichnet werden als Poly(organo)siloxane, eine Bezeichnung für eine Gruppe synthetischer Polymere, bei denen Siliziumatome über Sauerstoffatome verknüpft sind. Ein solcher Silikonschlauch weist den Vorteil auf, dass dieser Temperatur beständig, flexibel, witterungsbeständig und alterungsbeständig ist, und zudem ungiftig und schwer abbaubar. Ein solcher Silikonschlauch hat eine hohe Durchschlagfestigkeit, ist beständig gegen verdünnte Säuren und Laugen, ist lebensmittelecht bzw. lebensmittelkonform und Ozon beständig, und gibt daher auch keine verunreinigenden Substanzen an die Umgebung, insbesondere an allfällig vorhandenes Grundwasser. Im Gegensatz zu anderen lebensmittelechten Kunststoffen, wie zum Beispiel Polyethylen (PE) oder Polypropylen (PP) oder Polytetrafluorethylen, welche relativ fest und starr sind, ist Silikon ein elastisch bleibender Stoff.

Unter einem Faserschlauch wird ein aus Fasern hergestellter Schlauch verstanden. Die verwendeten Fasern umfassen beispielsweise Polyester, Polyamid oder Aramid und bestehen besonders vorteilhaft aus Polyester. Der Faserschlauch kann durch Weben, Flechten, Wirken oder Stricken hergestellt werden. Besonders vorteilhaft wird der Faserschlauch mit einer Rundwebmaschine als ein Endlos-Faserschlauch hergestellt. Dazu wird der Silikonschlauch in das Zentrum der Rundwebmaschine eingeführt und der Endlos-Faserschlauch entlang der Aussenoberfläche des Silikonschlauchs verlaufend hergestellt, sodass der Endlos-Faserschlauch ein den Silikonschlauch in Umfangsrichtung umgebendes Gewebe ausbildet.

Der Silikonschlauch hat insbesondere die Aufgabe die Fluiddichtheit, insbesondere die Wasserdichtheit zu gewährleisten. Der den Silikonschlauch umschliessende Endlos-Faserschlauch hat insbesondere die Aufgabe die auf die Wand des Silikonschlauchs wirkenden Kräfte aufzunehmen und zu halten. Der Endlos-Faserschlauch hat zudem beispielsweise die Aufgabe die Aussenhaut des Silikonschlauchs vor mechanischen Verletzungen zu schützen. Die elastischen Eigenschaften des Silikonschlauchs ergeben den Vorteil, dass dieser während der Fertigung des erfindungsgemässen Endloshalbzeug problemlos gespreizt werden kann, insbesondere um den Silikonschlauch an dessen Schlauchaussenoberfläche vorzugsweise flächig mit dem Endlos-Faserschlauch zu verbinden. Die Elastizität des Silikonschlauchs stellt somit sicher, dass dieser während des Verbindens mit dem Endlos-Faserschlauch nicht reisst, und dass sich der Silikonschlauch bezüglich Fertigungstoleranzen des Endlos-Faserschlauchs flexibel anpassen kann, sodass sichergestellt ist, dass der Silikonschlauch auch beim fertiggestellten Endloshalbzeug Fluid dicht ist. Sollte der Silikonschlauch nicht überall flächig mit dem Endlos-Faserschlauch verbunden sein, so ergeben die elastischen Eigenschaften des Silikonschlauchs den Vorteil, dass sich der Silikonschlauch unter einem vorhandenen Innendruck ausdehnt, bis der Silikonschlauch an der Innenseite des Endlos-Faserschlauchs anliegt, sodass der im Innern des Silikonschlauchs wirkende Druck über die Silikonschlauchwand zuverlässig auf den Endlos-Faserschlauch übertragen wird, ohne Gefahr, dass der Silikonschlauch unzulässige Dünnstellen entwickelt oder sogar reissen könnte. Durch die Kombination von Silikonschlauch und Endlos-Faserschlauch ist sichergestellt, dass das erfindungsgemässe Endloshalbzeug zuverlässig und langfristig Fluid dicht ist, dass dieses lebensmittelkonform ist, dass dieses auch einen höheren Innendruck von beispielsweise bis zu 120 bar oder bis zu 200 bar standhalten kann, und dass dieses auch in bautechnisch rauen Umgebungen eingesetzt werden kann. Das erfindungsgemässe Endloshalbzeug ist daher bestens geeignet zur Herstellung einer Erdwärmesonde, wobei eine solche Erdwärmesonde beziehungsweise das dazu verwendete Endloshalbzeug vorzugsweise eine Länge im Bereich zwischen 50m und 500 m Länge aufweist.

Der Silikonschlauch und der Endlos-Faserschlauch werden vorzugsweise derart verbunden, dass ein Matrixmaterial, vorzugsweise Silikon, in einen zwischen dem Silikonschlauch und dem Endlos-Faserschlauch ausgebildeten Spalt eingeführt wird, und das Matrixmaterial danach ausgehärtet wird, vorzugsweise indem das Matrixmaterial, der Endlos-Faserschlauch und der Silikonschlauch unmittelbar nach dem Zuführen des Matrixmaterials entlang einer gewissen Aushärtstrecke erwärmt wird. Vorteilhafterweise wird der Silikonschlauch zumindest im Bereich des Spaltes durch eine vorzugsweise innerhalb des Silikonschlauchs angeordnete Spreizvorrichtung aufgeweitet, sodass der ausgebildete Spalt reduziert wird, und die Aussenseite des Silikonschlauchs sicher mit der Innenseite des Endlos-Faserschlauch verbunden werden kann.

In einer weiteren vorteilhaften Ausgestaltung kann die Aussenseite des Endlos-Faserschlauchs zudem noch mit einer Schicht versehen werden, vorzugsweise mit einem Beschichtungsmaterial umfassend zumindest eines der Beschichtungsmaterialien Silikon, Polyurethan oder Polyurea.

Das mit dem erfindungsgemässen Verfahren hergestellte Endloshalbzeug kann auf einfache Weise zu Produkten wie eine Erdwärmesonde, eine Bohrlochalarmierung oder ein Sanierungsrohr weiterverarbeitet werden. Bei einem Endloshalbzeug, das für Erdwärmesonden verwendet wird, weist der Silikonschlauch einen Innendurchmesser im Bereich von vorzugsweise 10 cm bis 15 cm auf. Bei einem Endloshalbzeug, das für eine Bohrlocharmierung verwendet wird, weist der Silikonschlauch einen Innendurchmesser im Bereich von vorzugsweise 15 cm bis 25 cm auf. Bei einem Endloshalbzeug, das für ein Sanierungsrohr verwendet wird, weist der Silikonschlauch einen Innendurchmesser im Bereich von vorzugsweise 10 cm bis 100 cm auf.

Besonders vorteilhaft wird das Endloshalbzeug zu einer Erdwärmesonde weiter verarbeitet. Die Erdwärmesonde wird hergestellt indem das Endloshalbzeug auf eine erforderliche Länge, üblicherweise im Bereich von 50 bis 500 m, abgelängt wird, und das vordere Ende des Endloshalbzeugs Fluid dicht verschlossen wird. Diese Erdwärmesonde kann nun in ein Bohrloch eingeführt und abgesenkt werden, und danach über ein durch den Innenleiter unter Druck zugeführtes Fluid im Bohrloch entfaltet werden. Daraufhin wird der Innenleiter zurückgezogen und durch eine vorzugsweise eine thermische Isolation aufweisende Fluidzuleitung ersetzt. Somit steht die Erdwärmesonde für den Betrieb bereit, in dem über die isolierte Fluidzuleitung ein Fluid bis in den Bereich der Spitze der Erdwärmesonde eingeführt wird, dieses Fluid zwischen der isolierten Fluidzuleitung und dem Silikonschlauch wieder nach oben gefördert wird, und sich dabei erwärmt. Der Innenleiter ist vorzugsweise als dichtes, flexibles Schlauchgewebe bestehend aus Polyester ausgestaltet.

Besonders vorteilhaft kann das Endloshalbzeug auch zu einer Bohrlochalarmierung weiterverarbeitet werden. Die Bohrlochalarmierung wird hergestellt indem das Endloshalbzeug auf eine erforderliche Länge, üblicherweise im Bereich von 50 bis 100 m, abgelängt wird, und das vordere Ende des Endloshalbzeugs Fluid dicht verschlossen wird. Diese Bohrlochalarmierung kann nun in ein Bohrloch eingeführt und abgesenkt werden, und danach über ein durch den Innenleiter zugeführtes Fluid im Bohrloch entfaltet werden. Daraufhin kann die Bohrlochalarmierung mit einer Substanz wie zum Beispiel Beton aufgefüllt werden wobei der Innenleiter entweder vollständig zurückgezogen werden kann, oder im Beton verbleiben kann. Der Innenleiter kann zudem beispielsweise Sensoren, oder elektrische Leiter umfassen, oder kann zum Beispiel eine Zu- und Ableitung für eine Flüssigkeit umfassen, um den Pfeiler zum Beispiel zudem als Erdwärmesonde zu nutzen. Eine Bohrlochalarmierung umfassend das erfindungsgemässe Endloshalbzeug weist den Vorteil auf, dass allfällig vorhandenes Grundwasser durch die Bohrlochalarmierung bzw. durch die sich innerhalb der Bohrlochalarmierung befindlichen Gegenstände und Substanzen, nicht verschmutzt wird.

Besonders vorteilhaft kann das Endloshalbzeug auch zu einem Sanierungsrohr weiterverarbeitet werden. Das Sanierungsrohr wird hergestellt indem das Endloshalbzeug auf eine erforderliche Länge, üblicherweise im Bereich zwischen 50 und 1000 m, abgelängt wird, und das vordere Ende des Endloshalbzeugs Fluid dicht verschlossen wird. Diese Sanierungsrohr kann in ein bestehendes, zu sanierendes Rohr, zum Beispiel eine horizontal verlaufende Frischwasserleitung, eingezogen werden, und danach über ein durch den Innenleiter zugeführtes Fluid im zu sanierenden Rohr entfaltet werden. Daraufhin können das vordere und das hintere Ende des Sanierungsrohrs mit einer Wasserleitung verbunden werden, wobei das Wasser danach entlang des sanierten Teilstücks durch das Sanierungsrohr läuft, wobei das Sanierungsrohr vorzugsweise durch den Wasserdruck offen gehalten wird.

### Kurze Beschreibung der Zeichnungen

Die zur Erläuterung der Ausführungsbeispiele verwendeten Zeichnungen zeigen:
- Fig. 1: eine schematische Darstellung einer Vorrichtung zum Herstellen eines Endloshalbzeugs;
- Fig. 2: eine schematische Detailansicht einer Vorrichtung zur Aussenbeschichtung;
- Fig. 3: eine schematische Detailansicht eines Längsschnitts durch einen Silikonschlauch und ein Aussengewebe während dem Prozess des gegenseitigen Verbinden;
- Fig. 4: einen Querschnitt durch die Fig. 2 entlang der Schnittlinie A-A;
- Fig. 5: einen Querschnitt durch ein flach angeordnetes Endloshalbzeug;
- Fig. 6: einen Querschnitt durch ein gefaltetes Endloshalbzeug;
- Fig. 7: eine Seitenansicht eines aufgerollten Endloshalbzeugs.

Grundsätzlich sind in den Zeichnungen gleiche Teile mit gleichen Bezugszeichen versehen.

### Wege zur Ausführung der Erfindung

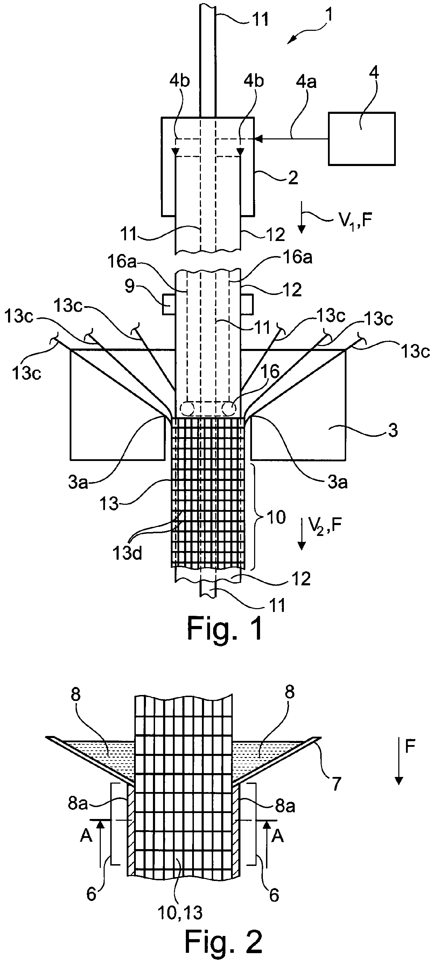

Fig. 1 zeigt eine schematische Darstellung einer Vorrichtung 1 zum Herstellen eines Endloshalbzeugs 10. Innerhalb einer schematisch dargestellten Extrusionsvorrichtung 2 wird aus einem von einem Silikonvorratsbehälter 4 über Zuleitungen 4a, 4b zugeleiteten flüssigen Silikon auf an sich bekannte Weise ein Silikonschlauch 12 hergestellt. Der Silikonschlauch 12 wird durch einblasen von Luft vorerst aufgeblasen und danach der aufgeblasene Schlauch vulkanisiert. Falls der Silikonschlauch 12 bei diesem Herstellungsverfahren ein Loch hätte, so würde dies das aufblasen verhindern und der Schlauch würde zusammenfallen. Somit ist während des Herstellungsprozesses auf einfache Weise überprüfbar, beispielsweise mit Hilfe von angeordneten Sensoren, ober der Silikonschlauch allenfalls Leckagestellen aufweist, beziehungsweise kann sichergestellt werden, dass der Silikonschlauch Fluid dicht ist. Durch dieses Herstellungsverfahren ist somit sichergestellt, dass die Wand des Silikonschlauchs 12 keine undichte Stelle aufweist. Der Extrusionsvorrichtung 2 wird, wie in Fig. 1 dargestellt, zudem ein Innenleiter 11 derart zugeführt, dass sich dieser entlang des Innenraums des hergestellten Silikonschlauchs 12 erstreckt. Der Innenleiter 11 ist beispielsweise ein gewebter Schlauch zum Zuführen eines Fluides in den Innenraum des Silikonschlauchs 12. Der Innenleiter 11 könnte jedoch beispielsweise auch ein elektrischer Leiter sein, oder könnte zudem beispielsweise Sensoren umfassen deren gemessene Daten über den elektrischen Leiter einer Steuervorrichtung zurückführbar sind. Der Silikonschlauch 12 wird mit einer Geschwindigkeit V₁ in Förderrichtung F gefördert.

Der Silikonschlauch 12 sowie der sich darin befindliche Innenleiter 11 wird mit Hilfe einer schematisch dargestellten Förderrichtung 9 einer schematisch dargestellten Rundwebmaschine 3 zugeführt. Die Rundwebmaschine 3 verwebt auf an sich bekannte Weise eine Mehrzahl von zugeführten Kettfäden 13c mit zumindest einem Schussfaden 13d, sodass ein schlauchförmiges Aussengewebe ausgebildet wird, welche den Endlos-Faserschlauch 13 ausbildet. Der Endlos-Faserschlauch 13 umschliesst den Silikonschlauch 12 in Umfangsrichtung vollständig, sodass ein schlauchförmiges Endloshalbzeug 10 umfassend den Innenleiter 11, den Silikonschlauch 12 sowie den Endlos-Faserschlauch 13 die Rundwebmaschine 3 in Förderrichtung F mit einer Fördergeschwindigkeit V₂ verlässt.

Anschliessend wird, wie in Fig. 2 dargestellt, an der Aussenseite des Endlos-Faserschlauchs 13 ein Beschichtungsmaterial 8 aufgetragen, welches sich in einem Tauchbecken 7 befindet, das die Aussenseite des Endlos-Faserschlauch 13 vollständig umschliesst. Das ursprünglich flüssige Beschichtungsmaterial 8 verbindet sich hierbei mit den Fasern des Endlos-Faserschlauch 13 und härtet anschliessend zu einer Oberflächenbeschichtung 8a aus, wobei das Beschichtungsmaterial 8 derart gewählt ist, dass es nach dem Aushärten dennoch elastisch und flexibel bleibt. Als Beschichtungsmaterial 8 wird vorzugsweise ein Silikon verwendet. Der Endlos-Faserschlauch 13 bzw. das schlauchförmige Endloshalbzeug 10 ist in Figur 2 nur schematisch dargestellt, und die Oberflächenbeschichtung 8a ist zur besseren Darstellung wesentlich dicker dargestellt, als diese in Wirklichkeit ist.

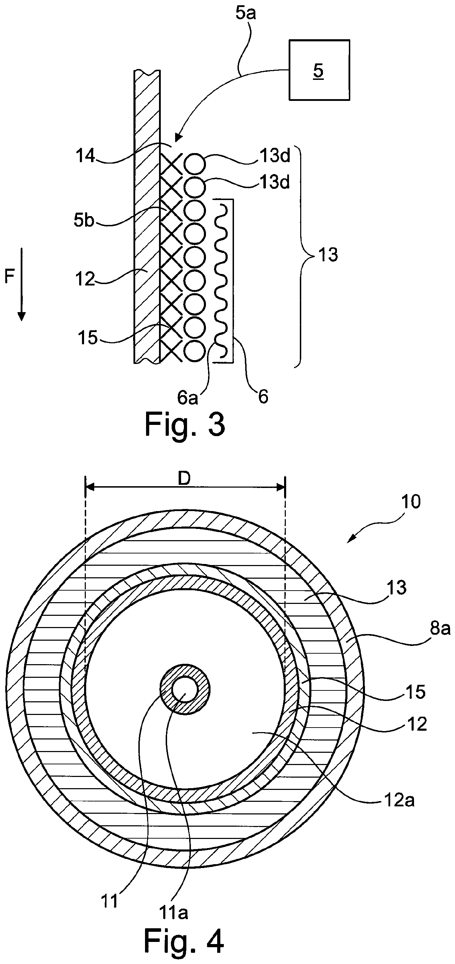

Fig. 3 zeigt schematisch einen Längsschnitt durch den Silikonschlauch 12 und den Endlos-Faserschlauch 13, wobei sich beide in der Rundwebmaschine 3 befinden, und wobei der oberste Schussfaden 13d den aktuellsten, von der Rundwebmaschine 3 eingetragenen Schussfaden 13d darstellt. Der Aussendurchmesser des Endlos-Faserschlauches 13 wird im Wesentlichen durch den Innendurchmesser der trichterförmigen Rundwebmaschine 3 an deren Kante 3a bestimmt. Im Bereich dieser Kante 3a wird, wie in Fig. 1 dargestellt, der Silikonschlauch 12 in den im Bereich der Kante 3a entstehenden Endlos-Faserschlauch 13 eingeführt. Dabei bildet sich, wie in Fig. 3 dargestellt, zwischen dem Endlos-Faserschlauch 13 und dem Silikonschlauch 12 ein Spalt 14 aus. In einer besonders vorteilhaften Ausgestaltung wird der Silikonschlauch 12 zumindest im Bereich der Kante 3a gespreizt, um den Spalt 14 vorhersehbar breit zu halten. Ausgehend von einem zweiten Vorratsbehälter 5 wird über eine Zufuhrleitung 5a ein Matrixmaterial, vorzugsweise Silikon, über die gesamte Umfangsrichtung verteilt dem Spalt 14 zugeführt, wobei der Silikonschlauch 12 sowie der Endlos-Faserschlauch 13 in Förderrichtung F gefördert wird, und dabei einer Vernetzungsvorrichtung 6 mit Infrarotstrahler 6a zugeführt wird. Dabei wird das an der Aussenoberfläche des Silikonschlauchs 12 und an der Innenoberfläche des Endlos-Faserschlauchs 13 anhaftende Matrixmaterial ausgehärtet, sodass der Silikonschlauch 12 und der Endlos-Faserschlauch 13 nach dem Aushärten miteinander verbunden sind, und vorteilhafterweise vollflächig und entlang der gesamten Umfangsfläche miteinander verbunden bzw. miteinander verklebt sind. In einer vorteilhaften Ausführungsform besteht das Gewebe des Endlos-Faserschlauchs 13 zumindest teilweise und vorteilhafterweise vollständig aus Polyesterfasern. Die Vernetzungsvorrichtung 6 erwärmt dieses Gewebe beispielsweise auf eine Temperatur im Bereich von 120°C, wodurch der Polyester beziehungsweise das mit Polyesterfasern gefertigte Gewebe schrumpf, sodass das Gewebe sich in dieser Phase von Aussen dem Silikonschlauch annähert, sodass sich das Gewebe und der Silikonschlauch zumindest stellenweise gegenseitig berühren und über das Matrixmaterial gegenseitig verklebt werden. In Figur 3 ist dieser in Förderrichtung F entlang der Vernetzungsvorrichtung 6 ablaufende Effekt der Spaltreduktion und der Durchmesserreduktion des Endlos-Faserschlauchs 13 nicht im Detail dargestellt.

Fig. 1 zeigt schematisch ein Ausführungsbeispiel einer Spreizvorrichtung 16, welche innerhalb des Silikonschlauchs 12 angeordnet ist, welche über den Umfang verteilt eine Mehrzahl von Rollen aufweist, die auf der Innenseite am Silikonschlauch 12 anliegen bzw. anliegen können, um den Silikonschlauch 12 von Innen zu spreizen. Die Spreizvorrichtung 16 ist über eine Aufhängung 16a mit einer nicht dargestellten Haltevorrichtung verbunden. Vorteilhafterweise ist es möglich die Lage der Spreizvorrichtung 16 in Verlaufsrichtung des Silikonschlauchs 12 zu verändern und einzustellen, vorzugsweise derart, dass sich die Spreizvorrichtung 16 im Bereich der Kante 3a befindet, und dadurch die Breite des Spaltes 14 und vorzugsweise auch die in Förderrichtung F verlaufende Form des Spaltes 14 eingestellt werden kann.

Fig. 4 zeigt schematisch einen Querschnitt des fertig erstellten Endloshalbzeugs 10 entlang der in Fig. 2 dargestellten Schnittlinie A-A. Der Silikonschlauch 12 weist einen ersten Innenhohlraum 12a auf. Der Innenleiter 11 ist innerhalb des ersten Innenhohlraums 12a verlaufend angeordnet und weist einen zweiten Innenhohlraum 11a auf. Der Endlos-Faserschlauch 13 sowie der Silikonschlauch 12 sind über die Verbindungsschicht 15 miteinander verbunden. Der Endlos-Faserschlauch 13 weist zudem eine Oberflächenbeschichtung 8a auf. Der Silikonschlauch 12 weist einen Innendurchmesser D auf. In einer vorteilhaften Ausgestaltung liegt der Innendurchmesser D, abhängig vom Einsatzgebiet des Endloshalbzeugs 10, in einem Bereich zwischen 10cm bis 100 cm. Die Elemente Silikonschlauch 12, Innenleiter 11, Verbundschicht 15, Endlos-Faserschlauch 13 und Oberflächenbeschichtung 8a ist im schematisch dargestellten Querschnitt gemäss Figur 4 zur besseren Erkennbarkeit wesentlich dicker dargestellt, als diese in Wirklichkeit sind.

In Fig. 1 sind die Herstellung des Silikonschlauchs 12 sowie die Herstellung des Endloshalbzeugs 10 nacheinander folgend dargestellt. In einem möglichen Verfahren kann deren Herstellung unmittelbar nacheinander erfolgen. In einem vorteilhaften Verfahren wird der Silikonschlauch 12 in einem ersten Verfahrensschritt hergestellt, und danach der Silikonschlauch 12 und der darin angeordnete Innenleiter 11 zwischengespeichert, beispielsweise indem diese gemeinsam auf einen Speicherträger aufgewickelt werden. In einem zweiten Verfahrensschritt wird der zwischengespeicherte Silikonschlauch 12 mit dem Innenleiter 11 der Rundwebmaschine 3 zugeführt und dabei der Silikonschlauch 12 mit einem Endlos-Faserschlauch 13 in Umfangsrichtung umhüllt und mit diesem verbunden. Diese Aufteilung in zwei Verfahrensschritte weist den Vorteil auf, dass unterschiedliche Produktionsgeschwindigkeiten bzw. unterschiedliche Fördergeschwindigkeiten V₁, V₂ durch die Zwischenspeicherung des Silikonschlauchs 12 mit Innenleiter 11 problemlos ausgeglichen werden können. Es ist jedoch auch möglich den ersten und den zweiten Verfahrensschritt mit derselben Fördergeschwindigkeit zu betreiben, sodass der vom Extruder 2 hergestellte Silikonschlauch 12 direkt der Rundwebmaschine 3 zurückführbar ist, und derart eine kontinuierliche Herstellung des Silikonschlauchs 12 und des gesamten Endloshalbzeugs 10 möglich ist.

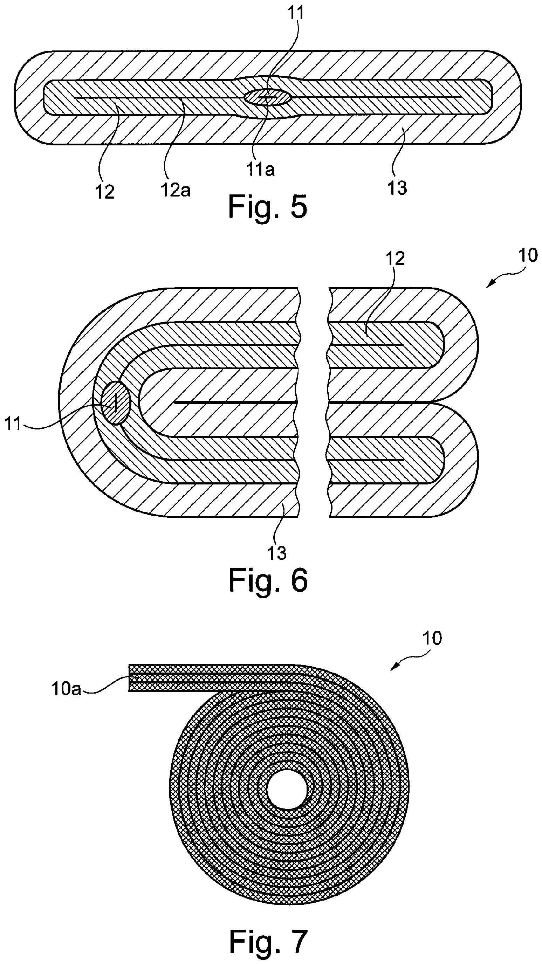

Das Endloshalbzeug 10 wird nach der Herstellung vorteilhafterweise, wie in Fig. 5 dargestellt, in einen flachen Zustand überführt, sodass sich kaum oder kein Fluid mehr im ersten Innenhohlraum 12a des Silikonschlauchs 12 bzw. im zweiten Innenhohlraum 11a des Innenleiters 11 befindet. In einem weiteren vorteilhaften Verfahrensschritt wird das Endloshalbzeug 10, wie in Fig. 6 dargestellt, zumindest einmal gefaltet, und danach, wie in Fig. 7 dargestellt, auf eine Rolle aufgewickelt. Eine Erdwärmesonde kann nun auf einfache Weise derart hergestellt werden, dass die Spitze 10a des Endloshalbzeugs 10 mit einem Fluid dichten Abschluss versehen wird, beispielsweise mit einem sogenannten Sondenfuss. Bei Einführen der Erdwärmesonde in ein Bohrloch wird die Spitze 10a, umfassend den Sondenfuss und zudem ein allfälliges Zusatzgewicht, in das Bohrloch eingelassen und abgesenkt, und die Erdwärmesonde nach dem vollständigen Einlassen durch Zuführen eines unter Druck stehenden Fluides über den Innenleiter 11 im Bohrloch entfaltet.

## Patentansprüche

1. Verfahren zur Herstellung eines Endloshalbzeugs (10), welches umfasst:
Zuführen eines Silikonschlauchs (12) sowie einen separaten Innenleiter (11), wobei der Innenleiter (11) in einem vom Silikonschlauch (12) gebildeten ersten Innenraum (12a) verläuft;
Umhüllen des zugeführten Silikonschlaucht (12) durch Herstellen eines den Silikonschlauch (12) von Aussen umschliessenden Endlos-Faserschlauchs (13);
Aufspreizen des Silikonschlauchs (12) sodass zwischen dem Silikonschlauch (12) und dem Endlos-Faserschlauch (13) ein Spalt (14) ausgebildet wird;
Zuführen eines Matrixmaterials in den Spalt (14); und
Verbinden des Silikonschlauchs (12) und des Endlos-Faserschlauchs (13) durch Aushärten des Matrixmaterials.

2. Verfahren nach Anspruch 1, welches umfasst:
Herstellen des Silikonschlauchs (12) durch Extrusion, und
Einführen des separaten Innenleiters (11) in den vom Silikonschlauch (12) gebildeten ersten Innenraum (12a).

3. Verfahren nach einem der vorhergehenden Ansprüche, **dadurch gekennzeichnet, dass** der Endlos-Faserschlauch (13) durch Rundweben hergestellt wird.

4. Verfahren nach Anspruch 3, **dadurch gekennzeichnet, dass** der Endlos-Faserschlauch (13) aus thermoplastischen Endlos-Fasern besteht.

5. Verfahren nach Anspruch 4, **dadurch gekennzeichnet, dass** der Silikonschlauch (12) und der Endlos-Faserschlauch (13) miteinander verbunden werden indem zumindest der Endlos-Faserschlauch (13) erwärmt wird,
sodass die thermoplastischen Endlos-Fasern des Endlos-Faserschlauchs (13) schrumpfen, der Spalt (14) dadurch reduziert wird, und das Matrixmaterial ausgehärtet wird.

6. Verfahren nach einem der vorhergehenden Ansprüche, **dadurch gekennzeichnet, dass** ein flüssiges Beschichtungsmaterial (8) ringförmig auf die Aussenseite des sich in Förderrichtung (F) bewegenden Endlos-Faserschlauch (13) aufgetragen wird, und dass das flüssige Beschichtungsmaterial (8) anschliessend ausgehärtet wird.

7. Verfahren nach einem der vorhergehenden Ansprüche, **dadurch gekennzeichnet, dass** die Fasern (13c, 13d) aus zumindest einer der nachfolgenden Fasern bestehen, Polyester, Polyamid und Aramid.

8. Vorrichtung (1) zum Herstellen eines Endloshalbzeugs (10), umfassend:
eine Fördervorrichtung (9) zum Zuführen eines Silikonschlauchs (12) sowie einem innerhalb des Silikonschlauchs (12) angeordneten Innenleiters (11);
eine Verbindungsvorrichtung (3) zum Verbinden von einer Mehrzahl von Fasern (13c, 13d) zu einem Endlos-Faserschlauch (13), und zum Umhüllen des zugeführten Silikonschlauch (12) mit dem Endlos-Faserschlauch (13);
eine Spreizvorrichtung (16) zum Aufweiten des Silikonschlauchs (12) und zur Reduktion eines Spaltes (14) zwischen Endlos-Faserschlauch (13) und Silikonschlauch (12);
eine Zuführvorrichtung (5) zum Zuführen eines flüssigen Verbindungsmittels (5b) in den Spalt (14); und
eine Vernetzungseinrichtung (6) zum Vernetzen des Verbindungsmittels (5b) und zum Verbinden des Silikonschlauchs (12) mit dem Endlos-Faserschlauch (13).

9. Vorrichtung (1) nach Anspruch 8, umfassend:
eine Extrusionsvorrichtung (2) zum Herstellen des Silikonschlauchs (12) und zum Einführen des Innenleiters (11) in den Silikonschlauch (2).

10. Vorrichtung nach einem der Ansprüche 8 bis 10, wobei das Verbindungsmittel (5b) Silikon, Polyurethan oder Polyurea umfasst.

11. Endloshalbzeug hergestellt durch ein Verfahren nach einem der Ansprüche 1 bis 7.

12. Erdwärmesonde mit einen Endloshalbzeug nach Anspruch 11 zur Verwendung in der Geothermie.

13. Bohrlocharmierung mit einem Endloshalbzeug nach Anspruch 11 zur Verwendung im Tiefbau bei vorhandenem Grundwasser.

14. Sanierungsrohr mit einen Endloshalbzeug nach Anspruch 11 zur Verwendung als Innenrohr defekter Rohrleitungen.
